# EUROPÄISCHE PATENTSCHRIFT

(11) **EP 3 529 090 B1**
(45) Veröffentlichungstag und Bekanntmachung des Hinweises auf die Patenterteilung: **04.11.2020**
(21) Anmeldenummer: 17758157.6
(22) Anmeldetag: 28.08.2017
(51) Int. Cl.: B60G 3/28, B60G 11/08, B60G 7/00, B60G 7/02, B60G 21/05

(54) **FEDEREINRICHTUNG FÜR EINE KRAFTFAHRZEUG-RADAUFHÄNGUNG**
SPRING DEVICE FOR A MOTOR-VEHICLE WHEEL SUSPENSION
DISPOSITIF RESSORT POUR UNE SUSPENSION DE VÉHICULE À MOTEUR

(30) Priorität: 18.10.2016 DE 102016220325
(43) Veröffentlichungstag der Anmeldung: 28.08.2019
(73) Patentinhaber: Volkswagen Aktiengesellschaft, 38440 Wolfsburg (DE)
(72) Erfinder: WINTER, Ingo, 38550 Isenbüttel (DE)
(86) Internationale Anmeldenummer: PCT/EP2017/071578
(87) Internationale Veröffentlichungsnummer: WO 2018/072917

(56) Entgegenhaltungen:
- DE-A1- 3 243 434
- DE-A1-102010 022 895
- DE-A1-102012 021 290
- DE-C- 344 355
- FR-A- 835 878
- JP-A- H 058 625
- JP-U- S56 131 203

## Beschreibung

Die Erfindung bezieht sich auf das Gebiet der Kraftfahrzeugtechnik und hier insbesondere auf eine Kraftfahrzeug-Radaufhängung mit einer Federeinrichtungje Radseite..

Eine gattungsgemäße Kraftfahrzeug-Radaufhängung ist aus der JP H05 8625 A bekannt. Eine Federeinrichtung der eingangs genannten Art ist aus DE 32 43 434 A1 im Zusammenhang mit einer Hinterachse eines Kraftfahrzeugs bekannt. Die Blattfeder aus faserverstärktem Kunststoff erstreckt sich in der Art eines Querlenkers in Fahrzeugquerrichtung zu einem Radträger und ist aufbauseitig gegen einen stabilen Achsträger aus Metall verspannt. Ferner umfasst die bekannte Hinterachse ein Federbein mit einer Schraubenfeder, welche die Abstützung des Fahrzeugaufbaus bewirkt.

Weiterhin offenbart DE 10 2013 209 648 A1 den Einsatz einer geschwungenen Feder aus faserverstärktem Kunststoff in einer Kraftfahrzeug-Radaufhängung.

Die Dokumente DE344355 und FR835878 offenbaren andere Kraftfahrzeug-Radaufhängungen.

Durch den Einsatz von Federeinrichtungen aus faserverstärktem Kunststoff in einer Radaufhängung zur Abstützung des Fahrzeugaufbaus und/oder gegebenenfalls auch zum Zweck der Radführung lässt sich das Gewicht einer Kraftfahrzeugachse verringern. Sollen entsprechende Federeinrichtungen vor allem als Querblattfedern eingesetzt werden, sich also überwiegend in Fahrzeugquerrichtung erstrecken, muss im Bereich der aufbauseitigen Anbindung eine massive Struktur geschaffen werden, welche den Gewichtsvorteil der leichteren Federeinrichtung beeinträchtigt.

Der Erfindung liegt die Aufgabe zu Grunde, den Gewichtsvorteil von Blattfedern aus faserverstärktem Kunststoff in einer Kraftfahrzeug-Radaufhängung möglichst wirkungsvoll in eine Verminderung des Gesamtgewichts eines Kraftfahrzeugs umzusetzen.

Diese Aufgabe wird durch eine Kraftfahrzeug-Radaufhängung gemäß Patentanspruch 1 gelöst, umfassend eine Federeinrichtung je Radseite, wobei die Federeinrichtung eine erste Blattfeder aus faserverstärktem Kunststoff, eine zweite Blattfeder aus faserverstärktem Kunststoff, die kürzer als die erste Blattfeder ist und mit der ersten Blattfeder gemeinsam eine V-förmige Struktur bildet, welche im Bereich der zusammengeführten Enden eine erste Befestigungseinrichtung zur fahrzeugaufbauseitigen Abstützung aufweist und an ihren freien Enden an der ersten Blattfeder eine zweite Befestigungseinrichtung zur radseitigen Abstützung und an der zweiten Blattfeder eine dritte Befestigungseinrichtung zur fahrzeugaufbauseitigen Abstützung aufweist,
, wobei die ersten und zweiten Blattfedern sich jeweils in Fahrzeugquerrichtung erstrecken oder mit dieser bei Betrachtung in einer horizontalen Ebene einen Winkel von maximal +/-15° einschließen. In Blickrichtung der Längsrichtung des Kraftfahrzeugs ergibt sich damit ein X-förmiges Federsystem, dessen Arme durch die insgesamt vier Blattfedern - jeweils zwei Blattfedern je Radseite - gebildet werden.

Hierdurch wird eine besonders leichte und kostengünstige Achse für ein Kraftfahrzeug geschaffen. Die erfindungsgemäße Lösung eignet sich insbesondere für Hinterachsen von Personenkraftfahrzeugen und leichten Nutzfahrzeugen, ohne jedoch hierauf beschränkt zu sein.

Weiterhin erfolgt eine aufbauseitige Krafteinleitung über zwei voneinander beanstandete Stellen, nämlich zum einen über das freie Ende der V-Form an der zweiten Blattfeder sowie über den Bereich der zusammengeführten Enden der V-Form bzw. der entsprechenden Endabschnitte der ersten und zweiten Blattfeder, so dass die korrespondierenden aufbauseitigen Strukturen am Kraftfahrzeug weniger massiv und damit weniger schwer ausgebildet werden können.

Zudem ermöglicht die erfindungsgemäße Anordnung der Federeinrichtung eine in Bezug auf die Hochrichtung eines Kraftfahrzeugs geringe Bauhöhe mit einem hohen Energieaufnahmevermögen.

Die Federeinrichtung kann in einer erfindungsgemäßen Kraftfahrzeug-Radaufhängung einen herkömmlichen Federlenker mit einer an diesem abgestützten Aufbaufeder ersetzen, und zwar insbesondere auch derart, dass die herkömmlichen rad- und aufbauseitigen Anbindungsstellen erhalten bleiben.

Vorteilhafte Ausgestaltungen der Erfindung sind Gegenstand weiterer Patentansprüche.

So können die erste Blattfeder und die zweite Blattfeder insbesondere als separate Bauteile ausgebildet werden, welche in V-Form miteinander verspannt sind. Dazu kann beispielsweise die erste Befestigungseinrichtung eine Einspannung zum gegenseitigen Verspannen von Endabschnitten der ersten und zweiten Blattfeder aufweisen.

Weiterhin kann die erste Befestigungseinrichtung eine Aufnahme für ein Lager zur schwenkbaren Abstützung an einem Fahrzeugaufbau oder einem am Fahrzeugaufbau vorgesehenen Hilfsrahmen aufweisen. Durch eine solche schwenkbaren Abstützung können insbesondere Relativbewegungen, welche sich infolge der gewünschten Verformungen der Blattfedern ergeben, besser ausgeglichen werden. Zudem lassen sich hierdurch Zwängungen vermeiden.

Weiterhin können die Blattfedern der Federeinrichtung so zueinander angeordnet werden, dass die Haupterstreckungsrichtung der ersten Blattfeder und die Haupterstreckungsrichtung der zweiten Blattfeder in entspanntem Zustand der Federeinrichtung einen spitzen Winkel, insbesondere einen spitzen Winkel von 15° bis 35° einschließen. Dies begünstigt in Einbaulage am Fahrzeug eine geringe Bauhöhe. Bei Entfall von separate Schraubenfedern zur Abstützung des Fahrzeugaufbaus können hierdurch zudem eine besonders große Kofferraum- bzw. Laderaumbreite und ein niedrig liegender Kofferraum- bzw. Laderaumboden erzielt werden.

Gemäß einer weiteren vorteilhaften Ausgestaltung der Erfindung weist die zweite Befestigungseinrichtung eine Lageraufnahme zur schwenkbaren Abstützung an einem Radträger auf. Über diese Befestigungseinrichtung werden in einer Radaufhängung Hoch- und Querkräfte vom Radträger an die erste Blattfeder übertragen. Die schwenkbare Anlenkung vermeidet Zwängungen und eröffnet einen größeren Gestaltungsrahmen im Hinblick auf das Anbringen weiterer Radführungsglieder zwischen dem Radträger und dem Fahrzeugaufbau. Es ist jedoch grundsätzlich auch möglich, bei Gewährleistung entsprechende Elastizitäten, die erste Blattfeder an dem Radträger nicht-gelenkig zu befestigen, beispielsweise fest einzuspannen.

Gemäß einer weiteren vorteilhaften Ausgestaltung der Erfindung weist die dritte Befestigungseinrichtung ein Koppelelement zur Verbindung des freien Endes der zweiten Blattfeder von unten an einem Abschnitt des Fahrzeugaufbaus auf. Über ein solches Koppelelement kann eine Hochkraft von der zweiten Blattfeder an den Fahrzeugaufbau übertragen werden. Zudem ermöglicht ein solches Koppelelement den Ausgleich von Relativbewegungen zwischen der zweiten Blattfeder und dem Fahrzeugaufbau, welche bei einer gewünschten Verformung derselben zu Federungszwecken unvermeidlich auftreten.

Gemäß einer vorteilhaften Ausgestaltung sind die zweiten Blattfedern jeweils von unten an einem Längsträger des Fahrzeugaufbaus abgestützt. Hierbei macht man sich zunutze, dass die Längsträger eines Kraftfahrzeugs in der Regel eine hinreichende Stabilität für die Abstützung von Hochkräften aufweisen, so dass der Einsatz einer Blattfeder aus faserverstärktem Kunststoff an dieser Stelle keine zusätzlichen Verstärkungsmaßnahmen erfordert, welche aufbauseitig das Gesamtgewicht des Kraftfahrzeugs erhöhen würden.

Wie oben bereits angedeutet, ermöglicht die erfindungsgemäße Federeinrichtung eine besonders flachbauende Achskonstruktion. Insbesondere können hierbei die ersten Blattfedern in Ruhestellung des Fahrzeugs auf einer horizontalen Fläche horizontal verlaufen oder mit einer horizontalen Ebene einen Winkel von maximal +/- 10° aufweisen.

Weiterhin können die ersten Befestigungseinrichtungen in Fahrzeugquerrichtung in einem Mittelbereich angeordnet sein, welcher in Fahrzeugquerrichtung durch die Längsträger des Fahrzeugaufbaus begrenzt wird. Insbesondere ist es möglich, die ersten Befestigungseinrichtungen in Fahrzeugquerrichtung bezogen auf die Spurweite des Fahrzeugs in einem mittleren Drittel, insbesondere mittleren Fünftel, um die Längsmittelachse anzuordnen. Dies ermöglicht eine besonders große Länge der Blattfedern und damit ein entsprechend hohes Energieabsorptionsvermögen, welches es wiederum gestattet, die Masse des Fahrzeugaufbaus allein über die Blattfedern abzustützen, wodurch für diesen Zweck üblicherweise vorgesehene Schraubenfedern gegebenenfalls vollständig entfallen können.

Erfindungsgemäß weist jede Federeinrichtung ein Koppelglied auf, welches diese in Richtung Fahrzeugmitte über den Punkt der fahrzeugaufbauseitigen Anbindung der ersten Befestigungseinrichtung hinaus fortsetzt, wobei die Koppelglieder der Federeinrichtungen durch ein Gelenk miteinander verbunden sind, um ein wechselseitiges Einfedern der Federeinrichtungen zu vermindern. Hierdurch kann über die Federeinrichtungen, insbesondere deren erste Blattfedern, zusätzlich die Funktion eines Stabilisators dargestellt werden.

Ferner ist es möglich, das jeweilige Koppelglied als Fortsatz an einer eine Einspannung für die erste und zweite Blattfeder ausbildenden ersten Befestigungseinrichtung auszubilden, wodurch eine besonders hohe Funktionsintegration in einem einzigen Bauteil erzielt wird. Nachfolgend wird die Erfindung anhand von in der Zeichnung dargestellten Ausführungsbeispielen näher erläutert. Die Zeichnung zeigt in:
- Figur 1: als erstes Ausführungsbeispiel eine Federeinrichtung der erfindungsgemäßen Kraftfahrzeug-Radaufhängung in einem Zustand, welcher der Einbaulage in einem Kraftfahrzeug bei Ruhestellung des Fahrzeugs auf einer horizontalen Fläche entspricht,
- Figur 2: eine Darstellung zur Veranschaulichung des Verformungspotenzials der Federeinrichtung gemäß Figur 1,
- Figur 3: als zweites Ausführungsbeispiel eine Kraftfahrzeug-Radaufhängung mit einer Federeinrichtung gemäß Figur 1 in einer Stellung, welche der Ruhestellung eines Kraftfahrzeugs auf einer horizontalen Fläche entspricht,
- Figur 4: eine Darstellung zur Veranschaulichung des Ein- und Ausfederns der Federeinrichtung in der Kraftfahrzeug-Radaufhängung gemäß Figur 3,
- Figur 5: als drittes Ausführungsbeispiel eine Kraftfahrzeug-Radaufhängung mit verkoppelten Federeinrichtungen in einer Stellung, welche der Ruhestellung eines Kraftfahrzeugs auf einer horizontalen Fläche entspricht,
- Figur 6: eine Darstellung zur Veranschaulichung eines wechselseitigen Federns der Federeinrichtungen in der Kraftfahrzeug-Radaufhängung gemäß Figur 5,
- Figur 7: eine Darstellung zur Veranschaulichung eines beidseitigen Einfederns der Federeinrichtungen in der Kraftfahrzeug-Radaufhängung gemäß Figur 5,
- Figur 8: eine Detailansicht der Kopplung der Federeinrichtungen, und in
- Figur 9: eine weitere Detailansicht der Kopplung der Federeinrichtungen, wobei die Lageraufnahme aufgeschnitten ist.

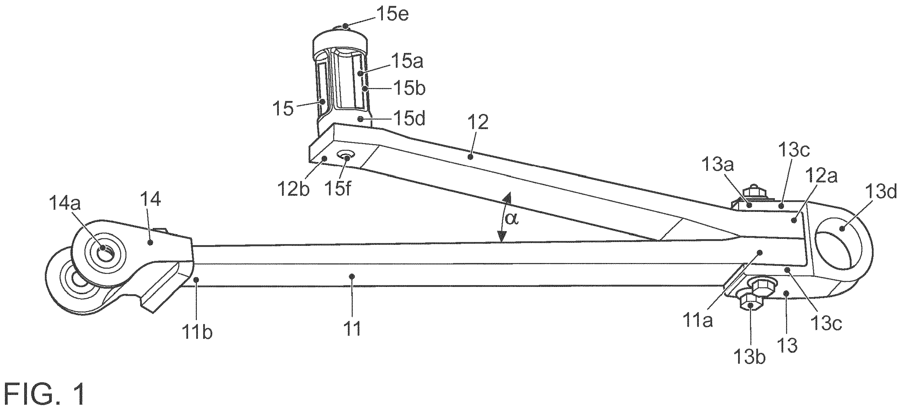

Das erste Ausführungsbeispiel zeigt eine Federeinrichtung 10 für eine Kraftfahrzeug-Radaufhängung. Die Federeinrichtung 10 weist eine erste Blattfeder 11 und eine zweite Blattfeder 12 auf. Beide Blattfedern 11 und 12 sind aus einem faserverstärkten Kunststoff, beispielsweise glasfaserverstärktem Kunststoff (GFK) oder kohlefaserverstärktem Kunststoff (CFK) gefertigt. Sie können insbesondere stab- oder balkenförmig ausgeführt sein. Beide Blattfedern 11 und 12 sind bei dem in Figur 1 dargestellten ersten Ausführungsbeispiel als separate Bauteile ausgeführt. Es ist jedoch auch möglich, beide Blattfedern 11 und 12 in einen aus faserverstärktem Kunststoff gefertigten einstückigen Körper zu integrieren.

Wie Figur 1 ferner entnommen werden kann, weisen beide Blattfedern 11 und 12 eine unterschiedliche Länge auf. So besitzt die erste Blattfeder 11 eine größere Länge als die zweite Blattfeder 12.

Weiterhin sind die erste Blattfeder 11 und die zweite Blattfeder 12 in einer besonderen Art und Weise räumlich zueinander angeordnet, nämlich um gemeinsam eine federnde V-förmige Struktur zu bilden. Dazu sind vorliegend jeweils ein Endabschnitt 11a der ersten Blattfeder 11 und ein Endabschnitt 12a der zweiten Blattfeder 12 zusammengeführt und miteinander verbunden, um die Spitze der V-förmigen Struktur zu bilden. Die jeweils gegenüberliegenden Endabschnitte 11b und 12b bilden entsprechend die freien Enden der V-Form. Dabei dienen die freien Enden sowie die Spitze der V-förmigen Struktur als Krafteinleitungsstellen in die Federeinrichtung 10.

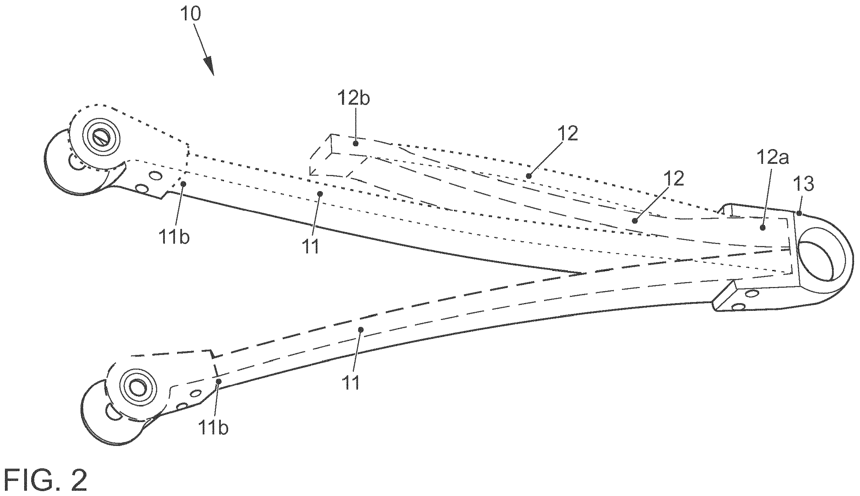

Im Hinblick auf eine geringe Einbauhöhe kann die V-Form so ausgeführt sein, dass die Haupterstreckungsrichtung der ersten Blattfeder 11 und die Haupterstreckungsrichtung der zweiten Blattfeder 12 in entspanntem Zustand der Federeinrichtung 10 einen spitzen Winkel α einschließen. Dieser spitze Winkel α liegt vorzugsweise im Bereich von 15° bis 35°, so dass einerseits eine geringe Einbauhöhe gewährleistet werden kann, andererseits ein hinreichendes Einfederungspotenzial zur Energieabsorption zur Verfügung steht. Figur 1 zeigt die Federeinrichtung 10 in etwas komprimiertem Zustand, welcher der Einbaulage im Fahrzeug entspricht. Der entspannte Zustand entspricht im Wesentlichem dem in Fig. 2 mittels gestrichelten Linien dargestellten ausgefederten Zustand.

An den genannten Krafteinleitungsstellen ist jeweils entsprechend eine Befestigungseinrichtung vorgesehen. Eine erste Befestigungseinrichtung 13 befindet sich somit im Bereich der zusammengeführten Endabschnitte 11a und 12a an der ersten und zweiten Blattfeder 11 und 12. Diese erste Befestigungseinrichtung 13 dient in einer Kraftfahrzeug-Radaufhängung zur fahrzeugaufbauseitigen Abstützung. Die Federeinrichtung 10 kann somit im Bereich der Spitze der V-förmigen Struktur am Fahrzeugaufbau oder einer fahrzeugaufbaufesten Struktur wie beispielsweise einem Hilfsrahmen oder dergleichen abgestützt werden.

Weiterhin befindet sich eine zweite Befestigungseinrichtung 14 am freien Ende der ersten Blattfeder 11. Diese zweite Befestigungseinrichtung 14 dient der radseitigen Abstützung beispielsweise an einem Radträger oder einem Radführungsglied. Ferner ist eine dritte Befestigungseinrichtung 15 am freien Endabschnitt 12b der zweiten Blattfeder 12 zur fahrzeugaufbauseitigen Abstützung vorgesehen.

Aufgrund der kürzeren Länge der zweiten Blattfeder 12 liegt deren fahrzeugaufbauseitige Abstützungsstelle am freien Endabschnitt 12b der zweiten Blattfeder 12 bei einer Anordnung der Federeinrichtung 10 in Fahrzeugquerrichtung näher zur Fahrzeugmitte als die radseitige Abstützungsstelle der ersten Blattfeder 11.

Die erste und zweite Blattfeder 11 und 12 können an ihren zusammengeführten Endabschnitten 11a und 12a unmittelbar miteinander verspannt werden.

Bei dem in Figur 1 dargestellten Ausführungsbeispiel weist die erste Befestigungseinrichtung 13 eine Einspannung 13a zum gegenseitigen Verspannen der Endabschnitte 11a und 12 a der ersten und zweiten Blattfeder 11 und 12 auf. Mittels der Einspannung 13a kann ferner auch eine Drehbewegung der ersten Blattfeder 11, welche aus einem Einfedern und einer Verformung derselben resultiert, an die zweite Blattfeder 12 übertragen werden und umgekehrt.

Die Einspannung 13a kann beispielsweise als gabelförmige Klaue ausgeführt werden, in welche die Endabschnitte 11a und 12a der ersten und zweiten Blattfeder 11 und 12 eingeführt werden. Die Ausgestaltung der Einspannung 13a ist jedoch nicht auf die Form einer solchen Klaue beschränkt. Vielmehr sind hier auch andere Ausgestaltungsformen möglich. Ein Verspannen kann wie dargestellt mittels Spannbolzen 13b erfolgen. Über entsprechende Flanschabschnitte 13b der Klaue wird eine gleichmäßige Verteilung der Spannkraft über die Oberfläche der Endabschnitte 11a und 12a erzielt.

Zudem ermöglicht die erste Befestigungseinrichtung 13 des Ausführungsbeispiels eine schwenkbare Lagerung der Federeinrichtung 10. Die erste Befestigungseinrichtung 13 kann dazu beispielsweise eine Aufnahme 13d für ein Lager zur schwenkbaren Abstützung am Fahrzeugaufbau oder einem am Fahrzeugaufbau vorgesehenen Hilfsrahmen aufweisen. Bei dem dargestellten Ausführungsbeispiel ist hierzu beispielhaft ein Lagerauge in die erste Befestigungseinrichtung 13 integriert. Als Aufnahme 13d für ein Lager kann jedoch beispielsweise auch ein Lagerbolzen oder dergleichen dienen, über den eine schwenkbare Lagerung realisierbar ist.

Die zweite Befestigungseinrichtung 14 kann beispielsweise eine Lageraufnahme 14a zur schwenkbaren Abstützung an einem Radträger aufweisen. Figur 1 zeigt hierzu rein beispielhaft eine als Gabel ausgebildete Lageraufnahme 14a, über welche beispielsweise ein Gummilager aufgenommen werden kann. Wie im Rahmen der ersten Befestigungseinrichtung 13 bereits erläutert, sind als Lageraufnahme 14a jedoch grundsätzlich auch andere Strukturen wie beispielsweise ein Lagerbolzen oder dergleichen möglich.

Grundsätzlich ist es möglich, den freien Endabschnitt 12b der zweiten Blattfeder 12 unmittelbar an einer aufbauseitigen Struktur zu befestigen. Im einfachsten Fall besteht die dritte Befestigungseinrichtung 15 dann lediglich aus einem oder mehreren Befestigungsmitteln wie Spannbolzen und dergleichen. Jedoch kann auch an dieser Stelle eine gelenkige Ankopplung vorgesehen werden, um einen zusätzlichen Freiheitsgrad einzuführen.

Überdies ist es möglich, über die dritte Befestigungseinrichtung 15 Relativbewegungen gegenüber dem Fahrzeugaufbau oder der fahrzeugaufbaufesten Struktur, welche sich infolge der Verformung der zweiten Blattfeder 12 kaum vermeiden lassen, zu kompensieren. Bei dem in Figur 1 dargestellten Ausführungsbeispiel weist hierzu die dritte Befestigungseinrichtung 15 ein Koppelelement 15a zur Verbindung des freien Endes der zweiten Blattfeder 12 von unten an einem Abschnitt des Fahrzeugaufbaus auf.

Das Koppelelement 15a kann beispielsweise einen druck- und zugsteif ausgebildeten Stützkörper 15b aufweisen, der über einen ersten Gummipuffer 15c am Fahrzeugaufbau und über einen zweiten Gummipuffer 15d am freien Endabschnitt 12b der zweiten Blattfeder 12 abgestützt ist. An den axialen Enden des Stützkörpers 15b können Zapfen 15e und 15f ausgebildet sein, welche den jeweiligen Gummipuffer 15c und 15d durchdringen und der Lagefixierung des Koppelelements 15a an der zweiten Blattfeder 12 sowie am Fahrzeugaufbau dienen, wo korrespondierende Öffnungen vorgesehen sein können. Die Gummipuffer 15c und 15d vermeiden Zwängungen beim Verformen und Verschwenken der zweiten Blattfeder 12, so dass das Verformungspotential der zweiten Blattfeder 12 gut ausgenutzt werden kann. Zudem kann einer Geräuschbildung entgegengewirkt werden. Alternativ kann über den Stützkörper 15b eine zusätzliche Elastizität in das Federsystem der Federeinrichtung 10 eingebracht werden, indem dieser als Feder ausgebildet wird.

Figur 2 zeigt das Ein- und Ausfederverhalten der Federeinrichtung 10. Dabei ist die Verformung der Blattfedern 11 und 12 im eingefederten Zustand gepunktet und im ausgefederten Zustand gestrichelt dargestellt. Da sich die Lage der fahrzeugaufbauseitigen Anbindungsstellen nicht verändert, bleiben die Positionen der Endabschnitte 12a und 12b der zweiten Blattfeder 12 praktisch unverändert, wenn man von einem gewissen Ausgleich von Relativverschiebungen im Bereich des Koppelelements 15 A und einem Verschwenken der ersten Befestigungseinrichtung 13 im zugehörigen Lager absieht. Dagegen bewegt sich der freie Endabschnitt 11b der ersten Blattfeder 11 mit dem Radträger merklich relativ zum Fahrzeugaufbau. Die hieraus resultierende Biegeverformung der ersten Blattfeder 11 führt aufgrund der Kopplung mit der zweiten Blattfeder 12 im Bereich der ersten Befestigungseinrichtung 13 zu einer Deformation auch der zweiten Blattfeder 12, welche somit ebenfalls Federungsenergie aufnimmt und entsprechende Reaktionskräfte über die dritte Befestigungseinrichtung 15, im vorliegenden Ausführungsbeispiel über das Koppelelement 15a, gegen den Fahrzeugaufbau abstützt.

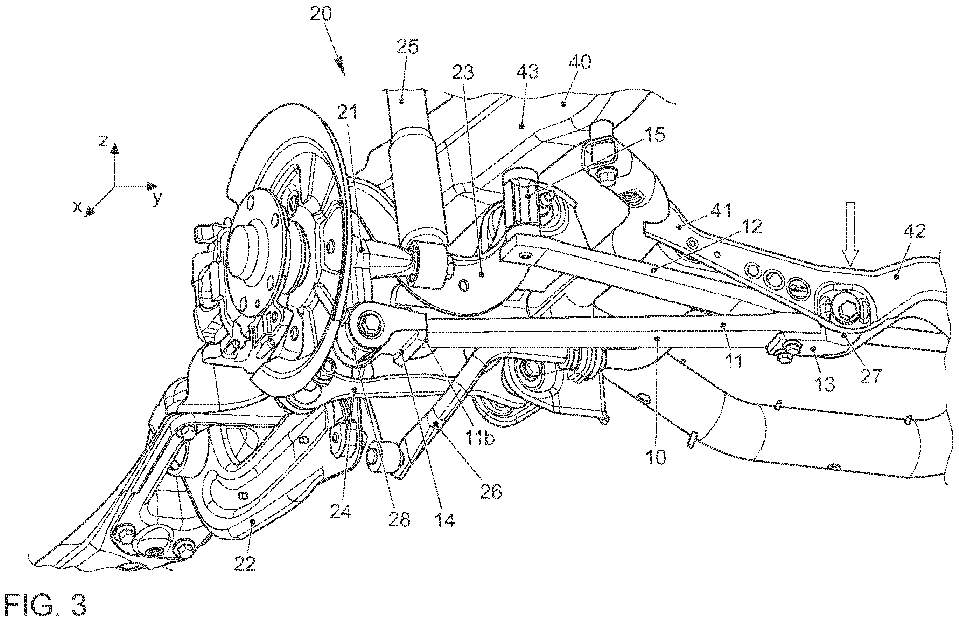

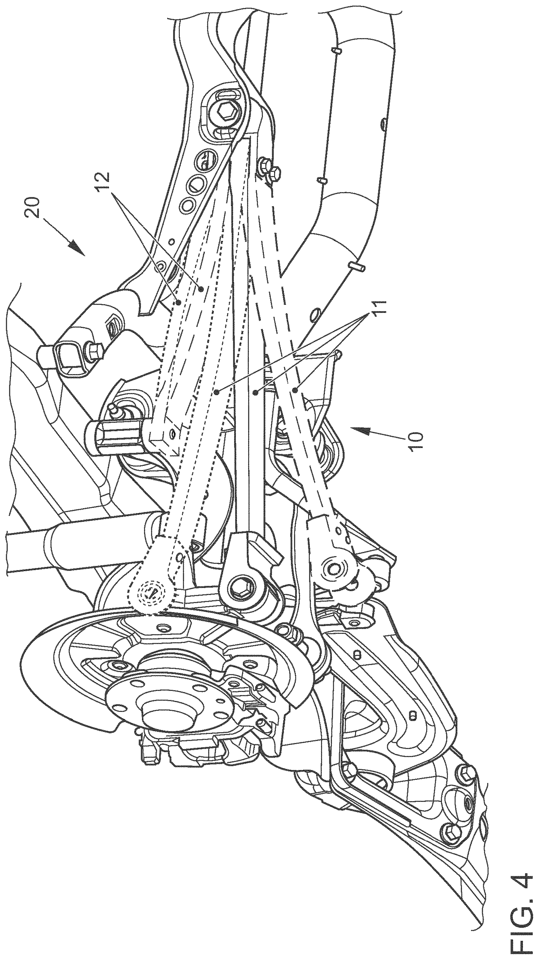

Mithilfe der Figuren 3 und 4 soll nun die Verwendung einer solchen Federeinrichtung 10 in einer Radaufhängung 20 eines Kraftfahrzeugs näher erläutert werden. In den Figuren 3 und 4 ist beispielhaft eine Hinterachse dargestellt, welche je Radseite eine solche Federeinrichtung 10 aufweist.

Die Radaufhängung 20 umfasst je Fahrzeugrad einen Radträger 21, welcher über mehrere Radführungsglieder gegen den Fahrzeugaufbau 40 oder eine fahrzeugaufbaufeste Struktur wie einen Hilfsrahmen 41 abgestützt ist.

Die Radführungsglieder umfassen vorliegend je Radseite einen Längslenker 22 sowie einen oberen Querlenker 23 und einen unteren Querlenker 24.

Weiterhin ist ein Schwingungsdämpfer 25 angedeutet, welcher sich mit einem Ende am Radträger 21, gegebenenfalls auch an einem Radführungsglied, und mit seinem anderen Ende am Fahrzeugaufbau 40 abstützt.

Die Radaufhängung 20 weist weiterhin einen Stabilisator 26 auf, der ein wechselseitiges Einfedern der Radträger 21 und damit der Fahrzeugräder vermindert.

Die vorliegende Radaufhängung 20 kommt ohne eine Schraubenfeder zur Abstützung der Fahrzeugmasse aus. Deren Funktion wird vorliegend durch die Federeinrichtung 10 übernommen. Es ist jedoch möglich, in einer Radaufhängung 20, welche eine Federeinrichtung 10 der oben erläuterten Art beinhaltet, zusätzlich herkömmliche Schraubenfedern zur Abstützung der Fahrzeugmasse einzusetzen.

Die dargestellte Radaufhängung 20 ist lediglich beispielhafter Natur, um die Einbaulage der Federeinrichtung 10 in einer solchen näher zu erläutern. Es muss daher ausdrücklich betont werden, dass entsprechende Federeinrichtungen 10 auch in anderen Radaufhängungen 20 als dargestellt zum Einsatz kommen können, um die Masse des Fahrzeugaufbaus gegen die Fahrzeugräder abzustützen und gegebenenfalls zusätzlich Radführungsaufgaben zu übernehmen.

Die oben erläuterte Federeinrichtung 10 ist derart in die Radaufhängung 20 eingebaut, dass sich die ersten und zweiten Blattfedern 11 und 12 jeweils in Fahrzeugquerrichtung y erstrecken oder mit der Fahrzeugquerrichtung y bei Betrachtung in einer horizontalen Ebene xy einen Winkel von maximal +/-15° einschließen.

Die erste Blattfeder 11 liegt dabei in Bezug auf die Fahrzeughochrichtung z unter der zweiten Blattfeder 12.

Ferner erstreckt sich die Federeinrichtung 10 sehr weit in Richtung Fahrzeugmitte, wodurch sich für die ersten und zweiten Blattfedern 11 und 12 eine große Länge mit entsprechend hohem Energieabsorptionsvermögen ergibt. Durch die gewählte V-Form bleibt die Bauhöhe in Fahrzeughochrichtung z gleichwohl gering.

In Ruhestellung des Fahrzeugs auf einer horizontalen Fläche horizontal verlaufen die ersten Blattfedern 11 überwiegend horizontal, d.h. sie schließen mit einer horizontalen Ebene xy einen Winkel von maximal +/- 10° ein.
Wie in Figur 3 gezeigt, erfolgt die Anbindung der Federeinrichtung 10 im Bereich der Spitze der V-Form mittels der ersten Befestigungseinrichtung 13 vorzugsweise an einer Querstrebe 42 des Hilfsrahmens 41. Gleiches gilt für die nicht näher dargestellte Federeinrichtung der gegenüberliegenden Radseite.

Um eine möglichst große Länge der Federeinrichtung 10 in Fahrzeugquerrichtung y zu realisieren, werden die ersten Befestigungseinrichtungen 13 in Fahrzeugquerrichtung y bezogen auf die Spurweite des Fahrzeugs vorzugsweise in einem mittleren Drittel, und weiter bevorzugt in einem mittleren Fünftel, um die Längsmittelachse des Fahrzeugs angeordnet. Die Anbindung am Hilfsrahmen 41 erfolgt vorliegend beispielhaft über ein Gummilager 27 in der Aufnahme 13d der ersten Befestigungseinrichtung 13, so dass die Federeinrichtung 10 um eine in Fahrzeuglängsrichtung x verlaufende Drehachse schwenken kann.

Weiterhin kann die Federeinrichtung 10 über ein weiteres Gummilager 28 schwenkbar am Radträger 21 angebunden werden. Dieses weitere Gummilager 28 koppelt den freien Endabschnitt 11b der ersten Blattfeder 11 gelenkig mit dem Radträger 21, wobei die zugehörige Schwenkachse des so gebildeten Gelenks ebenfalls überwiegend in Fahrzeuglängsrichtung x verläuft. Es ist jedoch auch möglich, den freien Endabschnitt 11b der ersten Blattfeder 11 beispielsweise in einer Einspannung am Radträger 21 aufzunehmen, d.h. ungelenkig zu befestigen.

Schließlich stützt sich die Federeinrichtung 10 mit dem freien Endabschnitt 12b der zweiten Blattfeder 12 am Fahrzeugaufbau 40 ab. Hierdurch wird die aufbauseitige Krafteinleitung auf zwei Stellen verteilt. Eine solche Abstützung der zweiten Blattfeder 12 kann beispielsweise, wie in Figur 3 gezeigt, an einem Längsträger 43 des Fahrzeugaufbaus 40 erfolgen. Bevorzugt erfolgt die Abstützung ferner von unten. Wie Figur 3 zeigt, kann über die betreffende Befestigungsvorrichtung 15, beispielsweise in Form eines definiert verformbaren Koppelelements 15a, ein Ausgleich von bei der gewollten Verformung der zweiten Blattfeder 12 auftretenden Relativbewegungen erzielt werden.

Die ersten Befestigungseinrichtungen 13 der beiden Federeinrichtungen 10 einer Kraftfahrzeugachse sind in Fahrzeugquerrichtung in einem Mittelbereich angeordnet, welcher in Fahrzeugquerrichtung durch die Längsträger 43 des Fahrzeugaufbaus 40 begrenzt wird.

Hierdurch ergibt sich eine flachbauende Kraftfahrzeugachse, welche eine niedrige Kofferraum- bzw. Laderaumkante und eine hohe Kofferraum- bzw. Laderaumbreite ermöglicht.

Zudem kann der Gewichtsvorteil der Blattfedern 11 und 12 aus faserverstärktem Kunststoff praktisch vollständig in eine Gewichtsverminderung des Fahrzeuggewichts umgesetzt werden, da im Bereich der aufbauseitigen Anbindung der Federeinrichtungen 10 keine gewichtserhöhenden Versteifungsmaßnahmen erforderlich werden, welche den Gewichtsvorteil der Federeinrichtungen 10 mit ersten und zweiten Blattfedern 11 und 12 aus faserverstärktem Kunststoff beeinträchtigen würden.

Figur 4 zeigt analog zu Figur 2 das Ein- und Ausfedern der Federeinrichtung 10, wobei der maximal eingefederte Zustand der Federeinrichtung 10 gepunktet dargestellt ist und der maximal ausgefederte Zustand der Federeinrichtung 10 gestrichelt dargestellt ist. Der Radträger 21 ist hierbei lediglich in der Ruhestellung des Fahrzeugs auf horizontaler Fläche gezeigt.

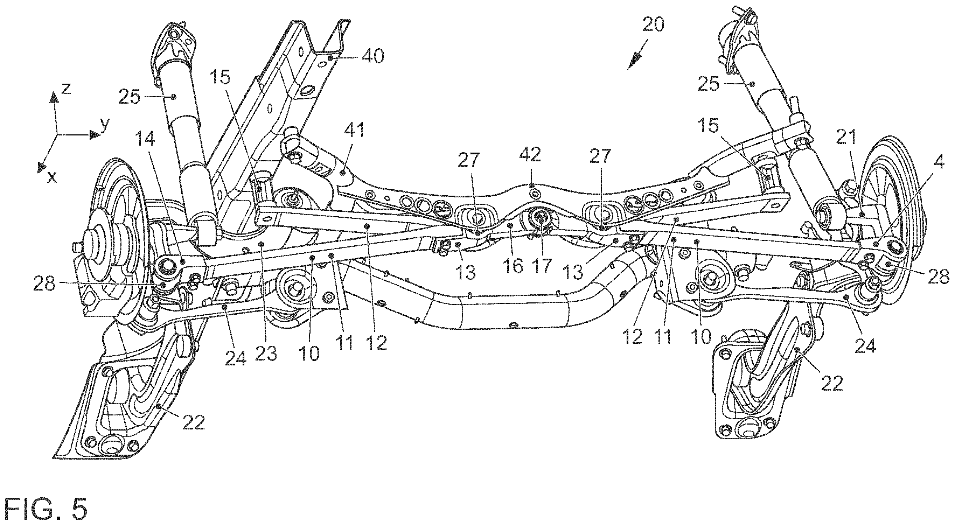

Anhand der Figuren 5 bis 9 soll abschließend anhand eines dritten Ausführungsbeispiels eine Abwandlungsmöglichkeit für den Einbau der Federeinrichtung 10 in eine Radaufhängung 20 aufgezeigt werden. Die Federeinrichtung 10 und Radaufhängung 20 des dritten Ausführungsbeispiels entsprechen im Wesentlichen den oben bereits erläuterten Ausführungsbeispielen, so dass in den Figuren 5 bis 9 entsprechende Bezugszeichen verwendet werden. Nachfolgend soll lediglich auf die Unterschiede zu dem ersten und zweiten Ausführungsbeispiel eingegangen werden.

Dem dritten Ausführungsbeispiel liegt die Überlegung zugrunde, die Funktion eines Stabilisators (vgl. Bezugszeichen 26 in Figur 3) durch die Federeinrichtungen 10 der Fahrzeugachse darzustellen, so dass ein Stabilisator als gesondertes Bauteil entfallen kann.

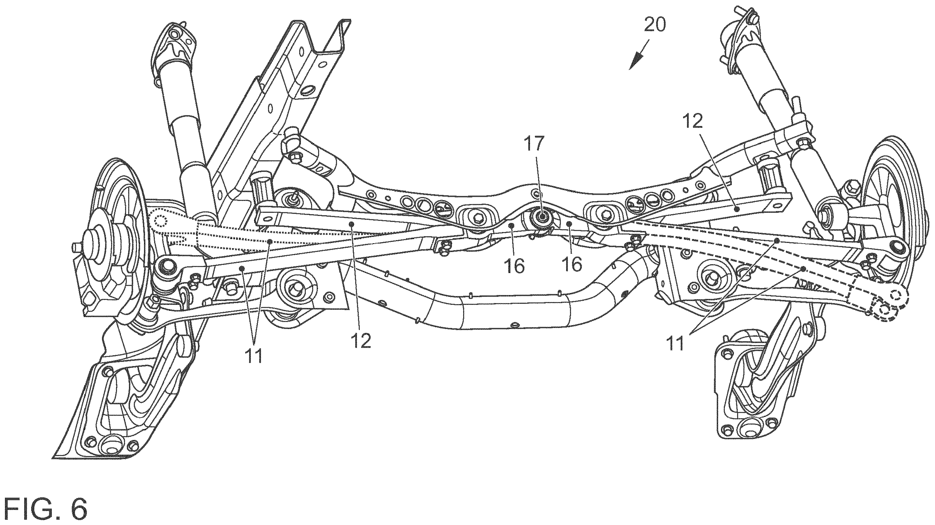

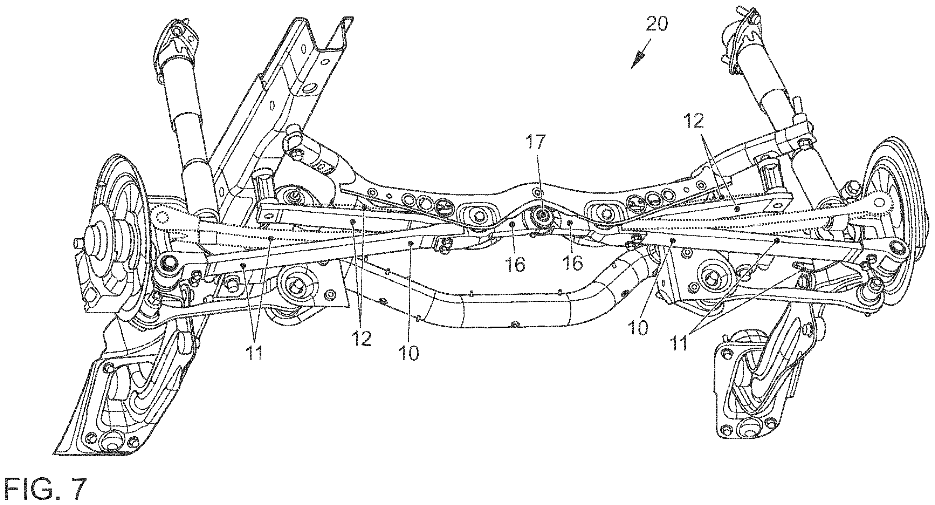

Dazu weist jede Federeinrichtung 10 ein Koppelglied 16 auf, welches die Federeinrichtung 10 in Richtung Fahrzeugmitte über die aufbauseitige Anbindung der ersten Befestigungseinrichtung 13 hinaus fortsetzt. Die Koppelglieder 16 der Federeinrichtungen 10 der beiden Radseiten sind durch ein Gelenk 17 miteinander verbunden. Dabei weist das Gelenk 17 eine Schwenkachse auf, welche in Fahrzeuglängsrichtung x verläuft. Durch diese Kopplung wird ein wechselseitiges Einfedern der Federeinrichtungen 10 und insbesondere deren erster Blattfedern 11, wie in Fig. 6 gezeigt, vermindert bzw. die betreffende Gesamtfederrate erhöht, da in diesem Fall die Koppelglieder 16 der beiden Federeinrichtungen 10 dazu neigen, sich in entgegengesetzte Richtung zu bewegen. Bei einem gleichseitigen Einfedern, wie in Figur 7 gezeigt, bewegen sich die Koppelglieder 16 hingegen in die gleiche Richtung. Die Gesamtfederrate ist dann geringer als bei wechselseitigem Einfedern.

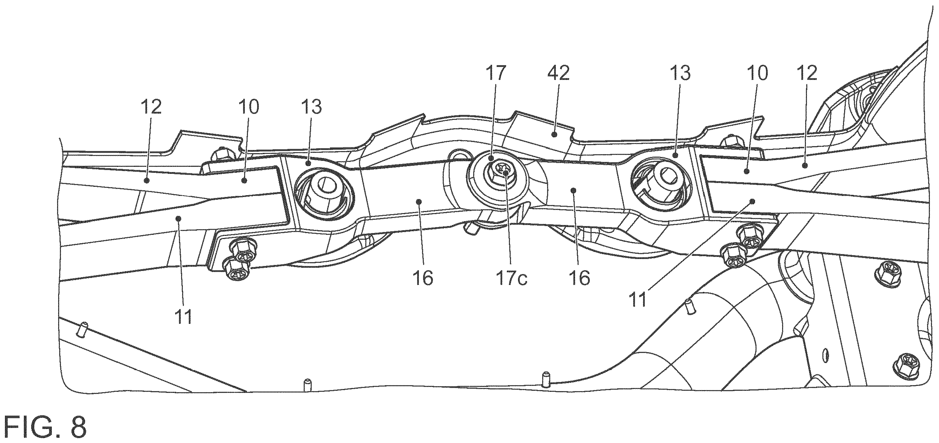

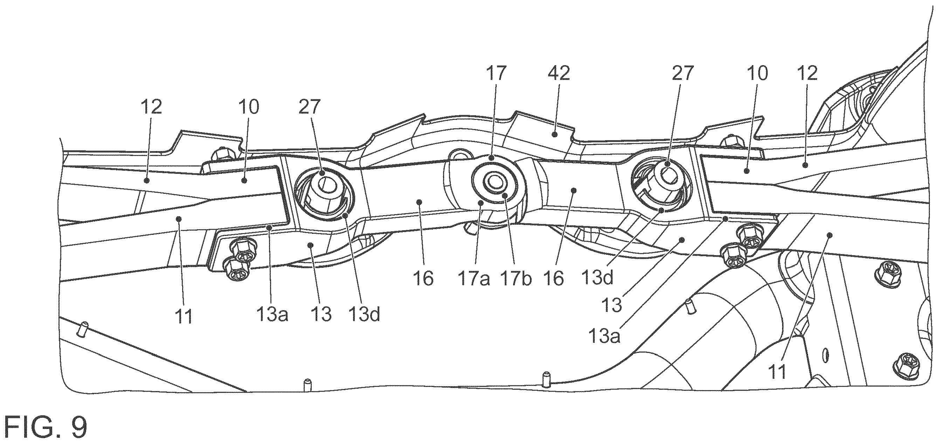

Die Koppelglieder 16 und deren Verbindung über das Gelenk 17 sind in den Figuren 8 und 9 näher dargestellt. So können die Koppelglieder 16 jeweils als Fortsatz der ersten Befestigungseinrichtung 13 der jeweiligen Federeinrichtung 10 ausgebildet sein, welche vorliegend weiterhin die Einspannung 13a und Lageraufnahme 13d, wodurch ein Bauteil mit hoher Funktionsintegration entsteht, das vorzugsweise aus einem metallischen Werkstoff hergestellt ist. Es ist jedoch auch möglich, die Blattfedern 11 und 12 jeweils über den Punkt der aufbauseitigen Anbindung hinaus in Richtung Fahrzeugmitte fortzusetzen und die entsprechenden Bauteile aus faserverstärktem Kunststoff über ein Gelenk 17 miteinander zu verbinden.

Das Gelenk 17 wird vorliegend durch ein an einem Koppelglied 16 ausgebildetes Gelenkauge 17a und einen an dem anderen Koppelglied 16 ausgebildeten Zapfen 17b gebildet. Beide Gelenksbestandteile werden durch einen Bolzen 17c in Richtung der Schwenkachse des Gelenks 17 zueinander gesichert. Das vorstehend erläuterte Gelenk 17 ist lediglich beispielhafter Natur. Anstelle des in den Figuren 8 und 9 dargestellten Gelenks 17 können auch andere Gelenke zum Einsatz kommen, welche eine schwenkbare Kopplung der Koppelglieder 16 beider Radseiten in Fahrzeugmitte gestatten.

Durch die Kopplung der Federeinrichtungen 10 einer Kraftfahrzeugachse kann die Funktion eines Stabilisators erzielt werden, da bei einem wechselseitigen Einfedern das Federsystem der gekoppelten Federeinrichtungen 10 versteift. Ein separater Stabilisator wird damit überflüssig.

Die Erfindung wurde vorstehend anhand von Ausführungsbeispielen und weiteren Abwandlungen näher erläutert. Die Ausführungsbeispiele und Abwandlungen dienen dazu, die Ausführbarkeit der Erfindung zu belegen. Technische Einzelmerkmale, welche oben im Kontext weiter Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist.
Die Erfindung ist daher ausdrücklich nicht auf die konkret beschrieben Ausführungsbeispiele beschränkt, sondern umfasst alle durch die Patentansprüche definierten Ausgestaltungen.

### Bezugszeichenliste

- 10: Federeinrichtung
- 11: erste Blattfeder
- 12: zweite Blattfeder
- 11a: gebundener Endabschnitt der ersten Blattfeder 11
- 11b: freier Endabschnitt der ersten Blattfeder 11
- 12a: gebundener Endabschnitt der zweiten Blattfeder 12
- 12b: freier Endabschnitt der zweiten Blattfeder 11
- 13: erste Befestigungseinrichtung
- 13a: Einspannung
- 13b: Spannbolzen
- 13c: Flanschabschnitt
- 13d: Aufnahme für Lager (Lageraufnahme)
- 14: zweite Befestigungseinrichtung
- 14a: Aufnahme für Lager (Lageraufnahme)
- 15: dritte Befestigungseinrichtung
- 15a: Koppelelement
- 15b: Stützkörper
- 15c: Gummipuffer
- 15d: Gummipuffer
- 15e: Zapfen
- 15f: Zapfen
- 16: Koppelglied
- 17: Gelenk
- 20: Kraftfahrzeug-Radaufhängung
- 21: Radträger
- 22: Längslenker
- 23: oberer Querlenker
- 24: unterer Querlenker
- 25: Schwingungsdämpfer
- 26: Stabilisator
- 27: Gummilager
- 28: weiteres Gummilager
- 40: Fahrzeugaufbau
- 41: Hilfsrahmen
- 42: Querstrebe
- 43: Längsträger
- x: Fahrzeuglängsrichtung
- y: Fahrzeugquerrichtung
- z: Fahrzeughochrichtung
- α: spitzer Winkel

## Patentansprüche

1. Kraftfahrzeug-Radaufhängung, umfassend eine Federeinrichtung (10) je Radseite, wobei die Federeinrichtung (10) eine erste Blattfeder (11) aus faserverstärktem Kunststoff,
eine zweite Blattfeder (12) aus faserverstärktem Kunststoff, die kürzer als die erste Blattfeder (11) ist und mit der ersten Blattfeder (11) gemeinsam eine V-förmige Struktur bildet, welche im Bereich der zusammengeführten Enden eine erste Befestigungseinrichtung (13) zur fahrzeugaufbauseitigen Abstützung aufweist und an ihren freien Enden an der ersten Blattfeder (11) eine zweite Befestigungseinrichtung (14) zur radseitigen Abstützung und an der zweiten Blattfeder (12) eine dritte Befestigungseinrichtung (15) zur fahrzeugaufbauseitigen Abstützung aufweist,
wobei die ersten und zweiten Blattfedern (11, 12) sich jeweils in Fahrzeugquerrichtung erstrecken oder mit dieser bei Betrachtung in einer horizontalen Ebene einen Winkel von maximal +/-15° einschließen,
**dadurch gekennzeichnet, dass**
jede Federeinrichtung (10) ein Koppelglied (16) aufweist, welches diese in Richtung Fahrzeugmitte über die fahrzeugaufbauseitige Anbindung der ersten Befestigungseinrichtung (13) hinaus fortsetzt, wobei die Koppelglieder (16) der Federeinrichtungen (10) durch ein Gelenk (17) miteinander verbunden sind, um ein wechselseitiges Einfedern der Federeinrichtungen zu vermindern.

2. Kraftfahrzeug-Radaufhängung nach Anspruch 1, **dadurch gekennzeichnet, dass** die erste Befestigungseinrichtung (13) eine Einspannung (13a) zum gegenseitigen Verspannen von Endabschnitten (11a, 12a) der ersten und zweiten Blattfeder (11, 12) aufweist.

3. Kraftfahrzeug-Radaufhängung nach Anspruch 1 oder 2, **dadurch gekennzeichnet, dass** die erste Befestigungseinrichtung (13) eine Aufnahme (13d) für ein Lager zur schwenkbaren Abstützung an einem Fahrzeugaufbau (40) oder einer fahrzeugaufbaufesten Struktur einschließlich eines am Fahrzeugaufbau (40) vorgesehenen Hilfsrahmen (41) aufweist.

4. Kraftfahrzeug-Radaufhängung nach einem der Ansprüche 1 bis 3, **dadurch gekennzeichnet, dass** die Haupterstreckungsrichtung der ersten Blattfeder (11) und die Haupterstreckungsrichtung der zweiten Blattfeder (12) in entspanntem Zustand der Federeinrichtung (10) einen spitzen Winkel (α), insbesondere einen spitzen Winkel von 15° bis 35° einschließen.

5. Kraftfahrzeug-Radaufhängung nach einem der Ansprüche 1 bis 4, **dadurch gekennzeichnet, dass** die zweite Befestigungseinrichtung (14) eine Lageraufnahme (14a) zur schwenkbaren Abstützung an einem Radträger (21) aufweist.

6. Kraftfahrzeug-Radaufhängung nach einem der Ansprüche 1 bis 5, **dadurch gekennzeichnet, dass** die dritte Befestigungseinrichtung (15) ein Koppelelement (15a) zur Verbindung des freien Endabschnitts (12b) der zweiten Blattfeder (12) von unten an einem Abschnitt des Fahrzeugaufbaus (40) aufweist.

7. Kraftfahrzeug-Radaufhängung nach einem der vorstehenden Ansprüche, **dadurch gekennzeichnet, dass** die zweiten Blattfedern (12) jeweils von unten an einem Längsträger (43) des Fahrzeugaufbaus (40) abgestützt sind.

8. Kraftfahrzeug-Radaufhängung nach einem der vorstehenden Ansprüche, **dadurch gekennzeichnet, dass** die ersten Blattfedern (11) in Ruhestellung des Fahrzeugs auf einer horizontalen Fläche horizontal verlaufen oder mit einer horizontalen Ebene einen Winkel von maximal +/- 10° einschließen.

9. Kraftfahrzeug-Radaufhängung nach Anspruch 7 **dadurch gekennzeichnet, dass** die ersten Befestigungseinrichtungen (13) in Fahrzeugquerrichtung in einem Mittelbereich angeordnet sind, welcher in Fahrzeugquerrichtung durch die Längsträger (43) des Fahrzeugaufbaus begrenzt wird.

10. Kraftfahrzeug-Radaufhängung nach einem der vorstehenden Ansprüche, **dadurch gekennzeichnet, dass** das jeweilige Koppelglied (16) als Fortsatz an einer eine Einspannung (13a) für die erste und zweite Blattfeder (11, 12) ausbildenden ersten Befestigungseinrichtung (13) ausgebildet ist.

## Claims

1. Motor-vehicle wheel suspension, comprising one spring device (10) per wheel side, wherein the spring device (10) has a first leaf spring (11) made of fiber-reinforced plastic,
a second leaf spring (12) made of fiber-reinforced plastic, which is shorter than the first leaf spring (11) and which together with the first leaf spring (11) forms a V-shaped structure, which, in the region of the joined ends, has a first fastening device (13) for support at the vehicle body, and at its free ends has at the first leaf spring (11) a second fastening device (14) for support at the wheel and at the second leaf spring (12) a third fastening device (15) for support at the vehicle body, wherein the first and second leaf springs (11, 12) respectively extend in the direction transverse to the vehicle, or with this enclose an angle of at maximum ±15° when viewed in a horizontal plane,
**characterized in that**
each spring device (10) has a coupling member (16) which continues such spring device in the direction of the vehicle center, beyond the attachment of the first fastening device (13) at the vehicle body side, wherein the coupling members (16) of the spring devices (10) are connected to one another by a joint (17), in order to reduce a mutual deflection of the spring devices.

2. Motor-vehicle wheel suspension according to claim 1, **characterized in that** the first fastening device (13) has a clamping (13a) for the mutual bracing of end sections (11a, 12a) of the first and second leaf springs (11, 12).

3. Motor-vehicle wheel suspension according to claim 1 or 2, **characterized in that** the first fastening device (13) has a receptacle (13d) for a bearing for pivotable support at a vehicle body (40) or a structure which is fixed to the vehicle body, including an auxiliary frame (41) provided at the vehicle body (40).

4. Motor-vehicle wheel suspension according to any of claims 1 through 3, **characterized in that** the main extension direction of the first leaf spring (11) and the main extension direction of the second leaf spring (12) in the relaxed state of the spring device (10) enclose an acute angle (a), in particular an acute angle of 15° to 35°.

5. Motor-vehicle wheel suspension according to any of claims 1 through 4, **characterized in that** the second fastening device (14) has a bearing receptacle (14a) for pivotable support at a wheel carrier (21).

6. Motor-vehicle wheel suspension according to any of claims 1 through 5, **characterized in that** the third fastening device (15) has a coupling element (15a) for connecting the free end section (12b) of the second leaf spring (12) from below to a section of the vehicle body (40).

7. Motor-vehicle wheel suspension according to any of the preceding claims, **characterized in that** the second leaf springs (12) are respectively supported from below on a longitudinal support (43) of the vehicle body (40).

8. Motor-vehicle wheel suspension according to any of the preceding claims, **characterized in that** the first leaf springs (11) travel horizontally on a horizontal surface in the rest position of the vehicle or, with a horizontal plane, enclose an angle of at most ±10°.

9. Motor-vehicle wheel suspension according to claim 7, **characterized in that** the first fastening devices (13) are arranged in a central region in the transverse direction of the vehicle, which central region is delimited in the transverse direction of the vehicle by the longitudinal supports (43) of the vehicle body.

10. Motor-vehicle wheel suspension according to any of the preceding claims, **characterized in that** the respective coupling member (16) is designed as an extension on a first fastening device (13) forming a clamping (13a) for the first and second leaf springs (11, 12).

## Revendications

1. Suspension de véhicule à moteur, comprenant un dispositif ressort (10) de chaque côté de la roue, dans laquelle le dispositif ressort (10) un premier ressort à lames (11) en matière plastique renforcée par des fibres,
un deuxième ressort à lames (12) en matière plastique renforcée par des fibres, qui est plus court que le premier ressort à lames (11) et forme conjointement avec le premier ressort à lames (11) une structure en V, laquelle présente, dans la zone des extrémités réunies un premier dispositif de fixation (13) pour l'appui côté carrosserie du véhicule et, au niveau de ses extrémités libres, sur le premier ressort à lames (11), un deuxième dispositif de fixation (14) pour l'appui côté roue et, sur le deuxième ressort à lames (12), un troisième dispositif de fixation (15) pour l'appui côté carrosserie de véhicule, dans laquelle les premier et deuxième ressorts à lames (11, 12) s'étendent respectivement dans la direction transversale du véhicule ou forment avec celle-ci, vus dans un plan horizontal, un angle de +/-15° maximum,
**caractérisée en ce que**
chaque dispositif ressort (10) présente un organe d'accouplement (16), qui prolonge celui-ci en direction du centre du véhicule par le biais de la liaison côté carrosserie de véhicule du premier dispositif de fixation (13), dans laquelle les organes d'accouplement (16) des dispositifs ressorts (10) sont reliés par l'intermédiaire d'une articulation (17), afin d'éviter un enfoncement réciproque des dispositifs ressorts.

2. Suspension de véhicule à moteur selon la revendication 1, **caractérisée en ce que** le premier dispositif de fixation (13) présente un serrage (13a) pour le serrage mutuel de sections d'extrémité (11a, 12a) du premier et du deuxième ressort à lames (11, 12).

3. Suspension de véhicule à moteur selon la revendication 1 ou 2, **caractérisée en ce que** le premier dispositif de fixation (13) présente un logement (13d) pour un palier pour l'appui pivotant sur une carrosserie de véhicule (40) ou une structure solidaire de la carrosserie, y compris un cadre auxiliaire (41) prévu sur la carrosserie de véhicule (40).

4. Suspension de véhicule à moteur selon l'une quelconque des revendications 1 à 3, **caractérisée en ce que** la direction d'extension principale du premier ressort à lames (11) et la direction d'extension principale du deuxième ressort à lames (12) à l'état détendu du dispositif ressort (10) forment un angle aigu (a), en particulier un angle aigu de 15° à 35°.

5. Suspension de véhicule à moteur selon l'une quelconque des revendications 1 à 4, **caractérisée en ce que** le deuxième dispositif de fixation (14) présente un logement de palier (14a) pour l'appui pivotant sur un support de roue (21).

6. Suspension de véhicule à moteur selon l'une quelconque des revendications 1 à 5, **caractérisée en ce que** le troisième dispositif de fixation (15) présente un élément de couplage (15a) pour la liaison de la section d'extrémité libre (12b) du deuxième ressort à lames (12) par dessous à une section de la carrosserie de véhicule (40).

7. Suspension de véhicule à moteur selon l'une quelconque des revendications précédentes, **caractérisée en ce que** les deuxièmes ressorts à lames (12) sont respectivement supportés par dessous au niveau d'un support longitudinal (43) de la carrosserie de véhicule (40).

8. Suspension de véhicule à moteur selon l'une quelconque des revendications précédentes, **caractérisée en ce que** les premiers ressorts à lames (11), en position de repos du véhicule, s'étendent horizontalement sur une surface horizontale ou forment avec un plan horizontal un angle de +/-10° maximum.

9. Suspension de véhicule à moteur selon la revendication 7 **caractérisée en ce que** les premiers dispositifs de fixation (13) sont disposés dans la direction transversale du véhicule dans une zone centrale, qui est délimitée dans la direction transversale du véhicule par les supports longitudinaux (43) de la carrosserie de véhicule.

10. Suspension de véhicule à moteur selon l'une quelconque des revendications précédentes, **caractérisée en ce que** l'organe d'accouplement (16) respectif est formé comme un prolongement d'un premier dispositif de fixation (13) formant un serrage (13a) pour le premier et le deuxième ressort à lames (11, 12).
